# EUROPEAN PATENT APPLICATION

(11) **EP 1 164 036 A1**
(43) Date of publication of application: **19.12.2001**
(21) Application number: 00202120.2
(22) Date of filing: 16.06.2000
(51) Int. Cl.: B60J 1/20, B60J 11/00

(54) **Vehicle window screen**

(71) Applicant: Chen, Tsen-Shen, Wufeng Hsiang, Taichung Hsien (TW)
(72) Inventor: Chen, Tsen-Shen, Wufeng Hsiang, Taichung Hsien (TW)
(74) Representative: Prins, Adrianus Willem

(57) **Abstract**

A vehicle window screen includes a net hood (10) having an open lower end so as to be mounted on a vehicle door from the top of the door. A tightening device is connected to the edge defining the open lower end to secure the net hood (10) on the frame of the door. The net hood (10) has an inside portion (11), an outside portion (12) and a hole (14,120) defined through the inside portion (11) or the outside portion (12) respectively for the door mirror (32) or the roller (21) of a sliding door (20). A slit (13) is defined in the net hood (10) from the hole (14,120) to the edge so that the shank (320) of the door mirror (32) or the roller (21) may pass through the slit (13) when mounting the window screen to the doorframe.

## Description

### 1. Field of the Invention

The present invention relates to a vehicle window screen, and more particularly, to a screen removably mounted on the window of a vehicle.

### 2. Description of Related Art

A conventional vehicle window screen is disclosed in U.S. Patent No. 5,713,624 to Tower with the title "Restraining Net For Car Window". The retraining net in the '624 patent has a complicated attachment device for securing the net to the window. A lot of time is required to attach or remove the retaining net. The operation of the attachment device will reduce the drivers' interest in using the retraining net. Another vehicle window screen is disclosed in European patent 09328016, entitled "Screen for Automobile". When using the screen, the screen encloses the door mirror. There are many tiny apertures defined through the net portion of the screen so that the net portion will distort the reflected images in the door mirror to the driver.

The main objective of the invention is to provide an improved vehicle window screen having a net hood with an open lower edge to be mounted on a vehicle door and a tightening means connected to the open lower edge to secure the net hood. The net hood includes an inside portion, an outside portion and a hole defined through the net through which a door mirror or the roller of a sliding door can extend. A slit is defined through the net hood and communicates with the hole so that the shank of the door mirror or the roller may pass through the slit when mounting the window screen to the doorframe. By such an arrangement, the ease of attaching or removing the window screen can be improved.

Other objects, advantages and novel features of the invention will become more apparent from the following detailed description when taken in conjunction with the accompanying drawings.

### IN THE DRAWINGS

Fig. 1 is a perspective view of a vehicle window screen in accordance with the present invention;
Fig. 2 is an operational perspective view of the window screen in Fig. 1 used with a vehicle having a sliding door;
Fig. 3 is an operational perspective view of the vehicle window screen in Fig. 1 mounted on the window frame a the sliding door,
Fig. 4 is a perspective view of another embodiment of the window screen in accordance with the present invention;
Fig. 5 is a perspective view of a third embodiment of the window screen in accordance with the present invention;
Fig. 6 is an operational perspective view of the window screen in Fig. 5 used on a vehicle door with a mirror;
Fig. 7 is an operational perspective view of the vehicle window screen in Fig. 5 mounted on the doorframe of the vehicle around the window; and
Fig. 8 is a cross sectional side plane view of the window screen in Fig. 5 mounted on the vehicle door.

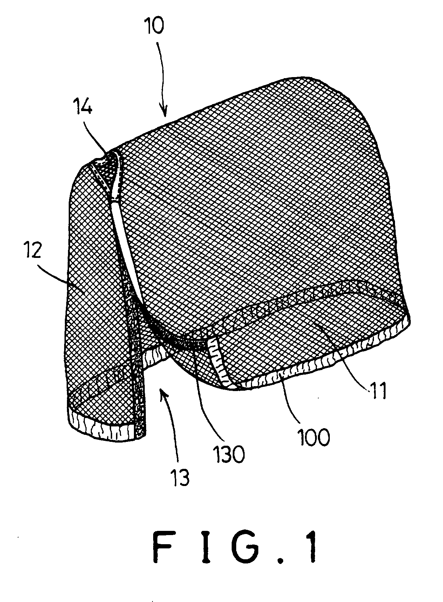

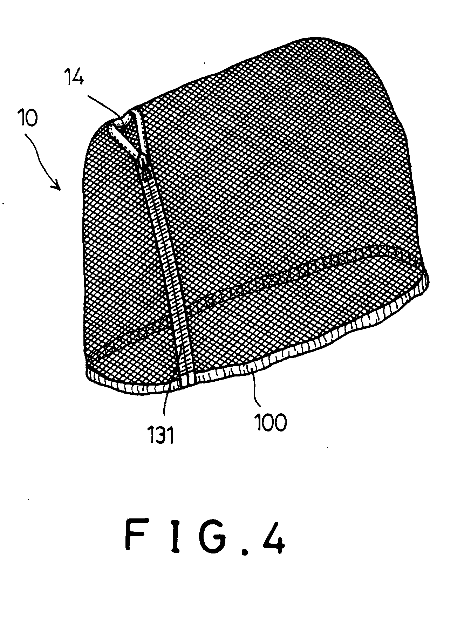

With reference to Figs. 1 and 4, a vehicle window screen in accordance with the present invention comprises a net hood (10) having an open lower end and a tightening means (100) connected to the periphery defining the open lower end. The net hood (10) has an inside portion (11) and an outside portion (12) wherein a slit (13) is defined through the inside portion (11). The slit (13) can be closed by an attaching means such as a Velcro strip (130) as shown in Fig. 1 or a zipper (131) as shown in Fig. 4. A hole (14) is defined through the net hood (10) at the upper end of the slit (13).

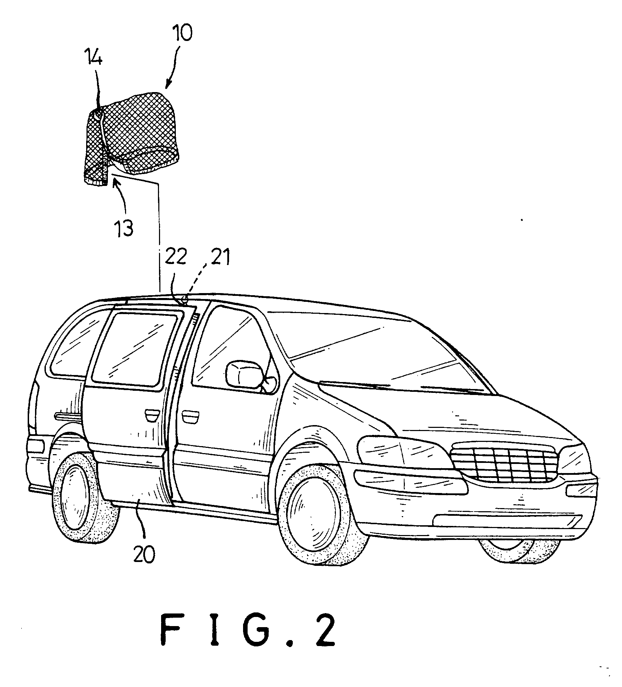

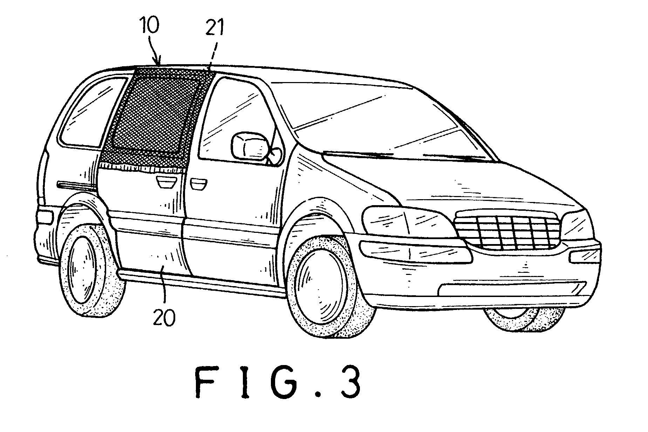

With reference to Figs. 2 and 3, when the net hood (10) is mounted on the window pane of the sliding door (20) of a van. The door roller (21) extends through the hole (14) with the roller shank (22) extending through the slit (13). The Velcro strip (130) or the zipper (131) then closes the slit (130) so the roller shank (22) holds the net hood (10) in place.

Accordingly, the net hood (10) is easily mounted on the window frame of the sliding door (20), and because the slit (13) is inside the vehicle, the slit (13) of the net hood (10) will not be opened by the wind.

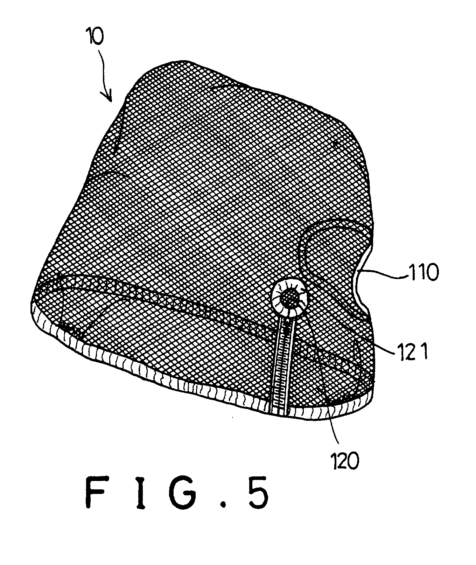

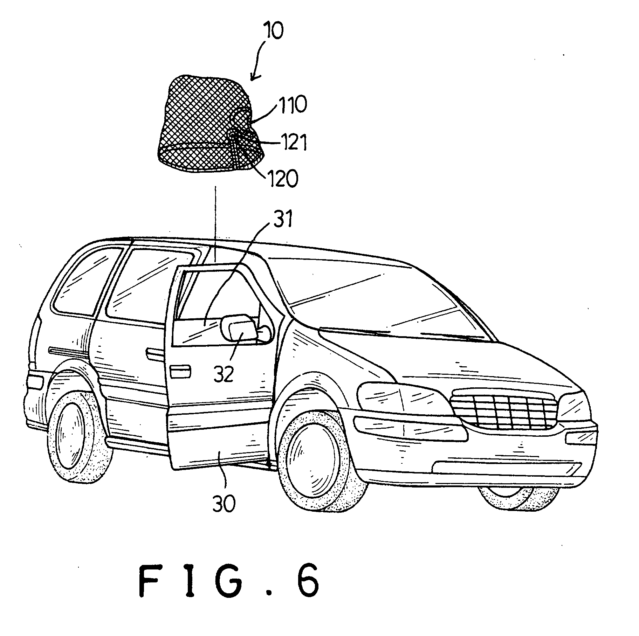

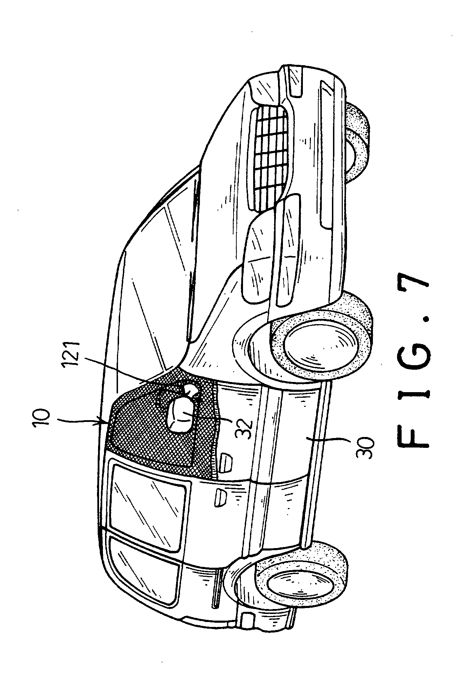

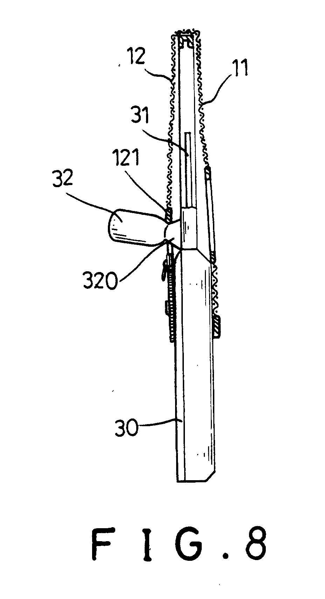

Figs. 5-8 show another embodiment of the vehicle window screen wherein a hole (120) is defined through the outside portion (12) so that the mirror (32) on the outside of the door (30) extends through the hole (120). A second tightening means (121) is attached to the periphery defining the hole (120) so as to reduce the gap defined between the shank (320) of the door mirror (32) and the periphery of the hole (120). The net hood (10) is mounted to the top of the frame of the vehicle door (30) in which a vertically movable window (31) is received. An aperture (110) aligned with the hole (120) in the outside portion (12) is defined through the inside portion (11) of the net hood (10). The diameter of the aperture (110) is made to be large enough so that the driver can clearly see the images in the outside mirror (32).

A slit is defined in the outside portion (12) from the hole (120) to the open lower end. The slit is sealed by a zipper or a Velcro strip, so that the hole (120) can be easily positioned around the shank portion (320) of the outside mirror (32) and the slit is then closed by the zipper or the Velcro strip to hold the net hood (10) in place.

## Claims

1. A screen mounted on the window pane of a vehicle, the screen comprising:
a net hood mounted on the window pane of a vehicle and having an open lower end and a first tightening means connected to a periphery defining the open lower end, the net hood having an inside portion, an outside portion and a hole defined therein .

2. The screen as claimed in claim 1, wherein, a slit is defined through the inside portion; and
the hole is defined in the inside portion at the end of the slit.

3. The screen as claimed in claim 2, wherein the slit is sealed by an attaching means.

4. The screen as claimed in claim 3, wherein the attaching means is a zipper.

5. The screen as claimed in claim 3, wherein the attaching means is an adhesive strip.

6. The screen as claimed in claim 1, wherein a slit is defined in the outside portion; the hole is defined in the outside portion and communicates with the slit; and an aperture aligned with the hole is defined in the inside portion.

7. The screen as claimed in claim 6, wherein the slit is sealed by an attaching means.

8. The screen as claimed in claim 7, wherein the attaching means is a zipper.

9. The screen as claimed in claim 7, wherein the attaching means is an adhesive strip.

10. The screen as claimed in claim 1 further comprising a second tightening means attached to the periphery defining the hole.
